# EUROPEAN PATENT SPECIFICATION

(11) **EP 2 387 486 B1**
(45) Date of publication and mention of the grant of the patent: **08.04.2020**
(21) Application number: 08876500.3
(22) Date of filing: 09.12.2008
(51) Int. Cl.: B25J 5/00, B62D 55/075

(54) **MOBILE ROBOTIC VEHICLE WITH TRACKS AND REAR FLIPPERS AND METHOD FOR OPERATING SUCH A VEHICLE**
MOBILES ROBOTERFAHRZEUG MIT LAUFKETTEN UND HINTEREN FLOSSEN UND BETRIEBSVERFAHREN FÜR SOLCH EIN FAHRZEUG
VÉHICULE ROBOTISÉ MOBILE MUNI DE CHENILLES ET DE LANGUETTES ARRIÈRE ET PROCÉDÉ DE FONCTIONNEMENT D'UN TEL VÉHICULE

(43) Date of publication of application: 23.11.2011
(73) Proprietor: iRobot Defense Holdings, Inc., Bedford, MA 01730 (US)
(72) Inventor: RUDAKEVYCH, Pavlo, E., Arroyo Grande CA 93420 (US)
(74) Representative: Peterreins Schley
(86) International application number: PCT/US2008/086106
(87) International publication number: WO 2010/068198

(56) References cited:
- WO-A1-2005/105388
- US-A1- 2007 029 117
- US-A1- 2008 086 241
- US-A1- 2008 179 115

## Description

### BACKGROUND

The invention relates generally to robotic mobile platforms.

Robots are useful in a variety of civilian, military, and law enforcement applications. For instance, a robotically controlled mobility platform can be used to inspect or search buildings under hazardous or hostile conditions. Dangerous situations can be improved by providing detailed information about the location, activities, and capabilities of opponents. Military applications can include reconnaissance, surveillance, bomb disposal and security patrols.

Advances are sought in the miniaturization of robots and the ability of robots to surmount obstacles.

Document US 2008/0179115 A1 discloses a tracked mobile robotic vehicle provided with flippers and a method for operating this robotic vehicle to cross an obstacle.

### SUMMARY

The details of one or more embodiments of the invention are set forth in the accompanying drawings and the description below. Other features, objects, and advantages of the invention will be apparent from the description and drawings, and from the claims.

One aspect of the invention features a mobile robot including a robot chassis having a forward end, a rearward end and a center of gravity. The robot further includes a driven support surface connected to the chassis and configured to propel the robot chassis forward and rearward. A first articulated arm is rotatable about an axis located rearward of the center of gravity of the robot chassis and is configured to: trail the robot, rotate in a first direction, raise the rearward end of the robot chassis while the driven support surface propels the chassis forward in surmounting an obstacle, and rotate in a second opposite direction to extend forward beyond the center of gravity of the robot chassis to raise the forward end of the robot chassis and invert the robot endwise. The mobile robot moreover comprises a controller that is configured to operate the mobile robot in an obstacle surmounting maneuver comprising the following operations: driving the support surface to propel the robot to contact a riser of a first obstacle with the forward end of the robot; driving the support surface to cause the forward end of the robot to ascend the riser of the first obstacle; pivoting the first arm to raise the rearward end of the robot as the forward end of the robot ascends the riser of the first obstacle; driving the support surface to advance the forward end of the robot over the top of the obstacle riser; and pivoting the arm to further raise the rearward end of the robot such that the forward end of the robot tips downward beyond the top of the riser of the first obstacle.

In some embodiments, the driven support surface includes a flexible track trained about a pair of wheels.

In some embodiments, the axis of the arm is coaxial with an axis of a one of the wheels.

In some embodiments, the robot includes a second articulated arm rotatable about the axis with the first articulated arm.

In some embodiments, the first and second arms are located outward of the driven support surface and are continuously rotatable in either direction.

In some embodiments, the first arm is located substantially along a central longitudinal axis of the robotic chassis.

In some embodiments, the first arm is continuously rotatable to provide a swimming-type propulsion.

In some embodiments, the first arm is configured to rotate at a predetermined rate as a function of an angle of incline of the robot chassis.

In some embodiments, the robot includes a radio transceiver and the first arm is rotatable to raise the robot chassis to elevate the transceiver.

Another aspect of the invention features a method for operating a mobile robotic vehicle having a driven support surface and a first pivoting trailing arm to surmount obstacles including a series of obstacle risers. The method includes driving the support surface to propel the vehicle to contact the riser of a first obstacle with a forward end of the vehicle, and driving the support surface to cause the forward end of the vehicle to ascend the riser of the first obstacle.

The method further includes pivoting the first arm to raise a rearward end of the vehicle as the forward end of the robot approaches the top of the riser of the first obstacle; driving the support surface to advance the forward end of the robot over the top of the obstacle riser; and pivoting the arm to further raise the rearward end of the vehicle such that the forward end of the vehicle rotates downward beyond the top of the riser of the first obstacle.

In some applications, the method includes repeating the driving and pivoting to surmount a second obstacle.

In some applications, the method includes pivoting the arm to raise the forward end of the vehicle above an underlying surface.

In some applications, the method includes further pivoting the arm to flip the vehicle endwise.

In some applications, raising the forward end of the vehicle raises a radio transceiver on the vehicle.

In some applications, the method includes supporting the vehicle in a first substantially horizontal orientation on an underlying surface, pivoting the arm to contact the underlying surface to raise the forward end of the vehicle and further pivoting the arm to rotate the forward end of the vehicle past a stable point and allowing the vehicle to topple over to a second orientation inverted with respect to the first orientation.

In some applications, the pivoting the first arm and driving the support surface are performed substantially asynchronously.

In some applications, the support surface propels the vehicle to a predetermined angle of incline before the first arm is initially pivoted to raise the rearward end of the vehicle.

In some applications, the first arm is pivoted at a predetermined rate for a predetermined period upon detection of a predetermined angle of incline of the vehicle.

The details of one or more embodiments of the invention are set forth in the accompanying drawings and the description below. Other features, objects, and advantages of the invention will be apparent from the description and drawings, and from the claims.

### DESCRIPTION OF DRAWINGS

FIG. 1 illustrates a robot and remote control system.
FIGS. 2a-d are perspective, front, side and top views of a robot having flippers.
FIGS. 3a-p are side views of a sequence of stair surmounting maneuvers.
FIG. 4 is flowchart of an obstacle surmounting control routine.
FIGS. 5a-r are side views of another sequence of stair surmounting maneuvers
FIG. 6 is flowchart of another obstacle surmounting control routine.
FIG. 7 is a perspective view of a robot in an elevated position during a self-righting maneuver.
FIG. 8 is a perspective view of a robot in a partially elevated position.
FIG. 9 is a partially exploded view of a robot chassis.
FIG. 10 is a perspective view of a flipper drive system.
FIG. 11 is a perspective view of opposing sprockets of a slip clutch.
FIG. 12 is a cross-sectional view of the opposing sprockets of the slip clutch assembled on a drive axle.
FIG. 13 is a perspective view of a robot including sensor zones
FIGS. 14a-c are perspective and like views of an electrical subassembly of a robot.
FIG. 15 is a functional block diagram of system components of a robot.
Like reference symbols in the various drawings indicate like elements.

Various tracked robotic vehicles have been developed that are the subject of, for example, U.S. Patent Nos. 6,431,296, 6,263,989, 6,668,951 and 6,615,885. These patents are instructive on the construction of tracked robotic vehicles having driven flippers, and means of articulation of robotic components.

Autonomous control routines and control systems useful, for example, to avoid an obstacle, escape an area, or navigate an area, optimize communications or coverage or seek radio performance are disclosed in U.S. Patent Application No. 11/633,869 filed Dec. 4, 2006 and titled "AUTONOMOUS COVERAGE NAVIGATION SYSTEM," and U.S. Patent Application No., 12/100,782 , filed 4/10/2008 and titled "ROBOTICS SYSTEMS". For example, to avoid an obstacle, a control routine can cause the robot to travel in an outward spiral or to bounce and recoil from obstacles making random turns.

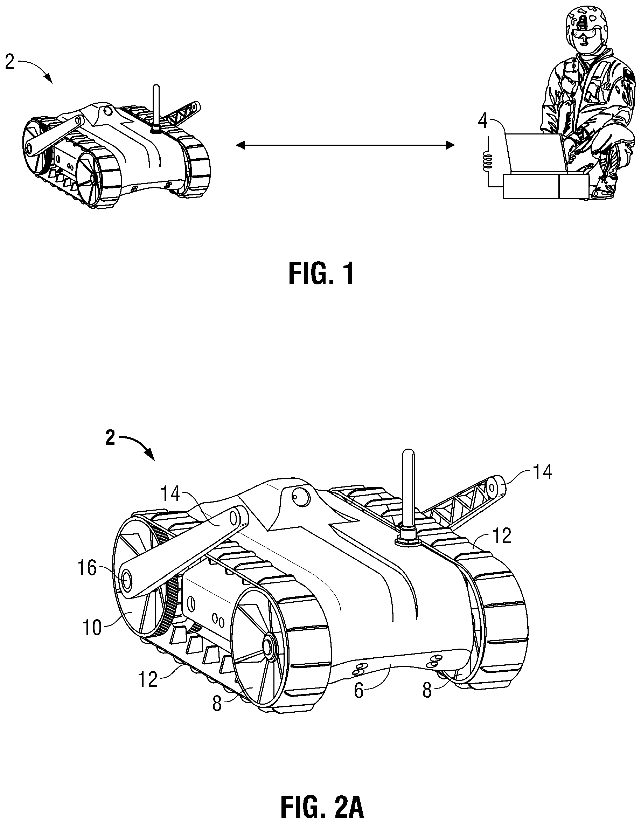

With reference to FIG. 1, a mobile robotic vehicle or robot 2 is operable via an Operator Control Unit (OCU) or remote control system 4. Remote communications can be transmitted via radio signal, infra red signal, wi-fi signal, cellular signal, or other suitable signal. In some circumstances, robot 2 can perform automated routines without remote use intervention. In other cases, a combination of automated routines and user controls are used to maneuver robot 2. Remote control system 4 can include any number of radio transceivers or other communications links and can interface with any number of robots or though any number of robots as mesh network nodes or other parts of a communications network.

This version of robot 2 is sized to be portable, and to substantially fit within a bounding volume approximately 18 cm (7 in.) long, 12 cm (5 inches) wide and 6 cm (2 inches) tall. The overall dimensions of a particular embodiment are about 16 cm x 12 cm x 6 cm excluding the antenna and camera protruding from the chassis, with a total mass of about 0.5 kg and a top speed of about 0.6 m/s over a smooth surface. In some embodiments, the vehicle is configured to fit in a combat uniform cargo pants pocket. Multiple robots 2 can be stacked to fit in a backpack. Compactness and portability allow robot 2 to be easily transported by an individual and to be deployed into an area by simply tossing the robot.

The robot is removed from a carrying compartment, is activated by pulling a grenade-style pull pin, and is then tossed down a corridor, up a stairwell or into a window. The platform can be thrown by a single person or launched into an upper window or rooftop using an improvised slingshot. Landing on a top floor, the remotely operated platform may be able to bypass some typical obstacles and travel down stairs. The operator can evaluate the resultant video before determining the next course of action. The robot can also be used to search for and assess booby traps, enemy personnel, and improvised explosive devices (IEDs).

In a particular embodiment, each of the robot 2 and remote controller 4 and weight less than eight pounds. In some cases the robot is between 0.5 and 1.0 Kg and the remote control 4 is a small PDA with a mass less than 0.5 kg. A separate charging station can be used for both the remote control 4 and robot 2.

Remote control system 4 allows an operator to control robot 2 from a distance. The operator can select different levels of human control over the robot, ranging from a teleoperation mode, in which the operator directly controls the motors and actuators on the robot, to autonomous operation, in which the operator passes higher-level command to the robot. In partially autonomous operation, robot 2 can perform tasks such as following a wall, avoiding an obstacle, surmounting an obstacle, avoiding a drop off or "cliff," avoiding becoming high centered, evading a moving object, positioning a transceiver, self-righting, repositioning to optimize communication network coverage, and the like.

Alternative versions of the remote control system 4 support teleoperation as well as a means of switching between teleoperation and autonomous control. The user can interrupt autonomous operation of the robot at any time to give commands and direction, and the robot can operate autonomously when not receiving particular directions from the user. The system provides predetermined warning signals to the operator, for instance if it is unable to operate autonomously, possibly by means of a vibrating unit that could be worn by the operator and which would be effective in a noisy environment. In addition, the user can add additional tasks to the robot's mission and request notification from the robot when milestone tasks have been achieved.

Versions of the robot can perform various autonomous tasks which can be initiated by the operator from remote control system 4. These include obstacle avoidance, wall following, climbing stairs, recovery from high centering, self-righting, returning "home," searching for a designated object, mapping, and establishing a communications network. The robot can use the various mobility modes described above in these autonomous operations, and if necessary, can call for operator assistance during its execution of a task. Alternative configurations of pivotal arms can be used. For example, a single central "arm" can be used.

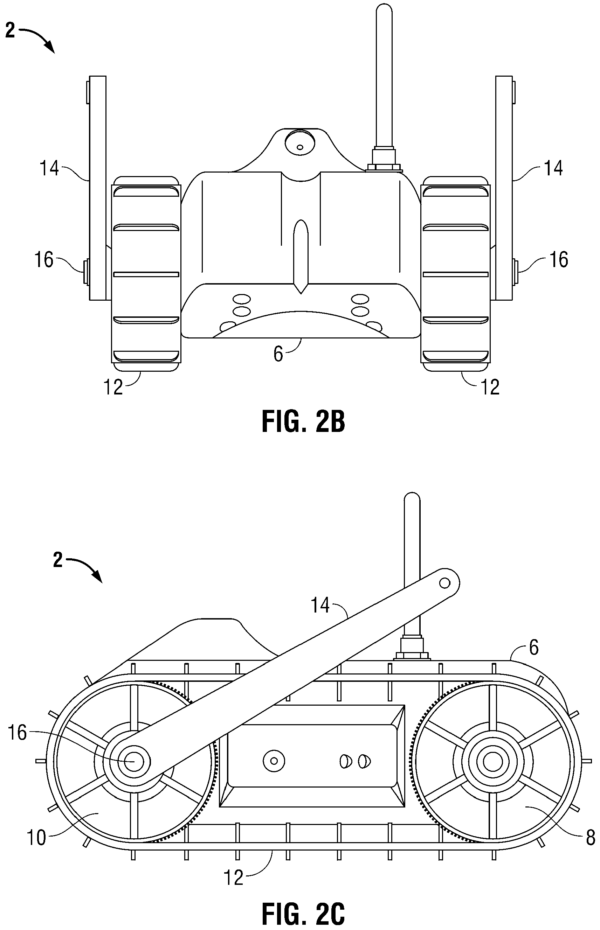

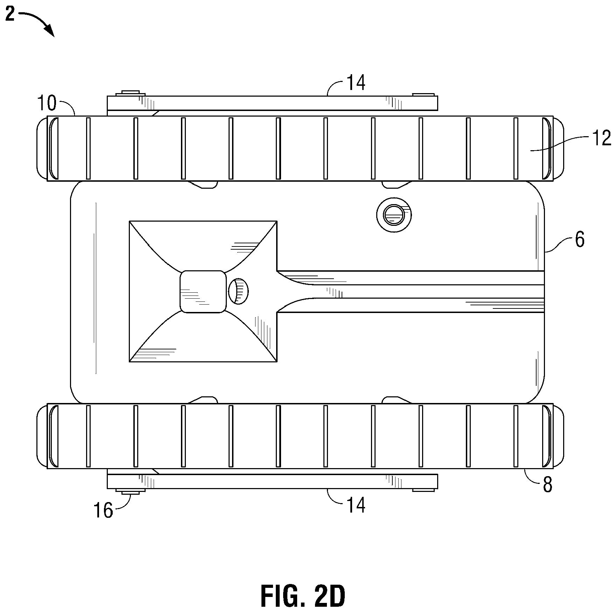

With reference to FIGS. 2a-d, robot 2 includes a body portion or chassis 6 housing, inter alia, drive components, a power supply, control system and communication module. A pair of drive wheels 8 is positioned at a forward end of chassis 6 and a pair of idler wheels 10 is positioned at a rearward end of chassis 6. Wheels 8 and 10 can include spiral spokes to provide additional impact resistance.

A pair of resilient tracks 12 is trained about wheels 8 and 10 on opposing sides of chassis 6 extending from the sides of the chassis to provide a driven support surface for robot 2. Tracks 12 are continuous flexible belts with interior surface features for engaging drive wheels 8 and exterior surface features for gaining traction over various terrains.

First and second rotatable arms or flippers 14 extend radially from a common drive axle 16. In the illustrated embodiment, idle wheels 10 free spin about flipper drive axle 16. Flippers 14 are configured to extend through a 360 degree range of motion to allow robot 2 to perform various positioning, obstacle surmounting and self-righting maneuvers. In other embodiments, a single rotatable arm can accomplish these functions. In a particular embodiment, flippers 14 are made from a flame rated advanced formula polymer with 85D Shore hardness available from Quantum Cast, part number AFP3100FR, UL 94 FR and FAR 25.853. Through holes or other features can be provided on flippers 14 for attachment of flipper accessories, e.g., cameras, sensors, or wheels positioned at the flipper tip or along the flipper length. For example, a camera, antenna or sensor can be mounted on the end of the arm to provide better exposure or higher vantage point.

Flippers 14 can be rotated to any desired angle relative to chassis 6. Robot 2 is designed to move about in a variety of environments, including an urban environment of buildings (including staircases), streets, underground tunnels, as well as in vegetation, such as through grass and around trees. Robot 2 has a variety of features which provide robust operation in these environments, including impact resistance and tolerance of debris entrainment. Wheels 8 and 10 are positioned on chassis 6 to provide greater ground clearance when right side up, yet can provide sufficient clearance in some embodiments for operation when robot 2 is inverted. In the present embodiments, robot 2 preferably recovers from a tumble or fall in which it is inverted by a self-righting function.

Chassis 6 and other rigid robot components are designed for strength and low weight and are made from durable plastic, polymer, composites, 7075-T6 aluminum or other suitable lightweight, impact resistant materials. Tracks 12, wheels 8 and 10 and flippers 14 are also configured to be impact resistant. For example, wheels 8 and 10 can be a pliable material and can include spiraled spokes to provide a degree of resilience. Impact resistance is accomplished, in part, by surrounding much of the vehicle with compliant tracks 12 with pliable cleats. Tracks 12 and cleats provide a first layer of impact protection.

Tracks 12 are configured to provide skid steering and include compliant belts made of polyurethane or a similar flexible material. The belts are abrasion resistant and have high strength and minimal stretch due to internal steel or fiber cording. Tracks 12 define a left-right alternating tread to smooth successive impacts on most surfaces with a spacing between successive edges on the sides to catch larger terrain features for traction. Without a bogey rail, the robot tends to tread on the portion of the tracks at wheels' bottom dead center.

Tracks 12 can be stretched over wheels 8 and 10 and driven primarily by friction. The surfaces of wheels 8 and 10 contacting tracks 12 can be provided with a fine knurl pattern to enhance friction with tracks 12 and prevent slippage from formation of water films between wheels 8 and 10 and tracks 12. Alternatively, tacks 12 and drive wheels 8 can be formed with complementary features to provide positive drive engagement. For example, wheels 8 and 10 can have V-shaped grooves around their circumference to receive an integral V-shaped rib on the inside of track 12.

Alternative embodiments of the robot can use other types of tracks, such as tracks made up of discrete elements. However, debris may be caught between elements and such tracks are generally heavier than flexible belts. Other flexible materials can also be used for continuous belt tracks. Tracks 12 can include cleats, ridges, or other projections for additional traction. Such cleats can be angled to divert debris away from chassis 6.

Flippers 14 can be can be continuously rotated around axle 16. Flippers 14 can be rotated to a forward "stowed" position next to chassis 6. Alternatively, flippers 14 can be rotated to a rearward trailing position to prevent catching of the ends of flippers 14 on terrain, for example in tall grass. In some embodiments, to prevent possible damage, flippers 14 can automatically return to a stowed position when robot 2 detects that it is in free fall.

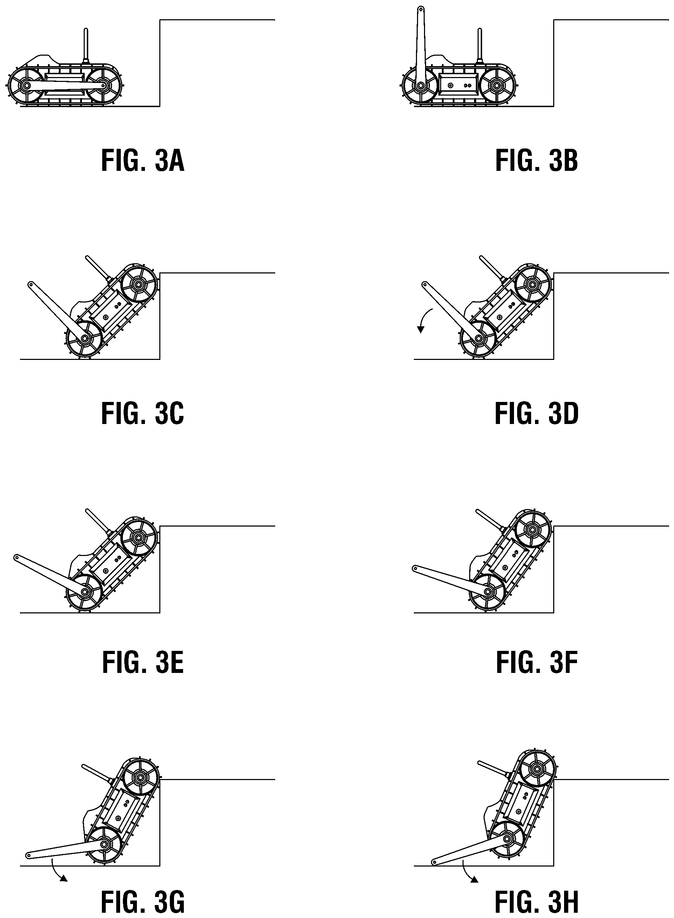

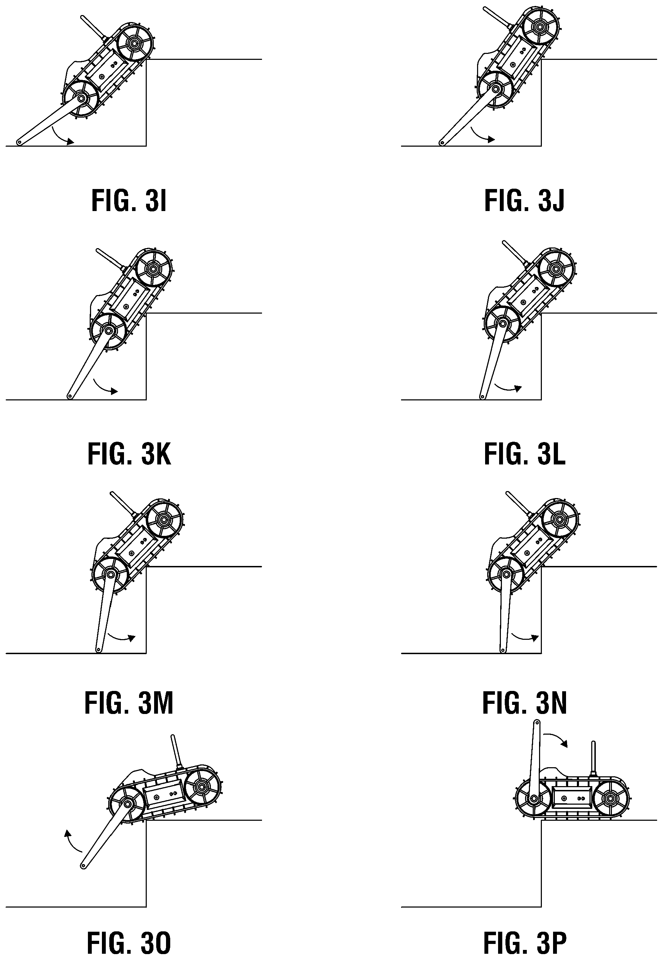

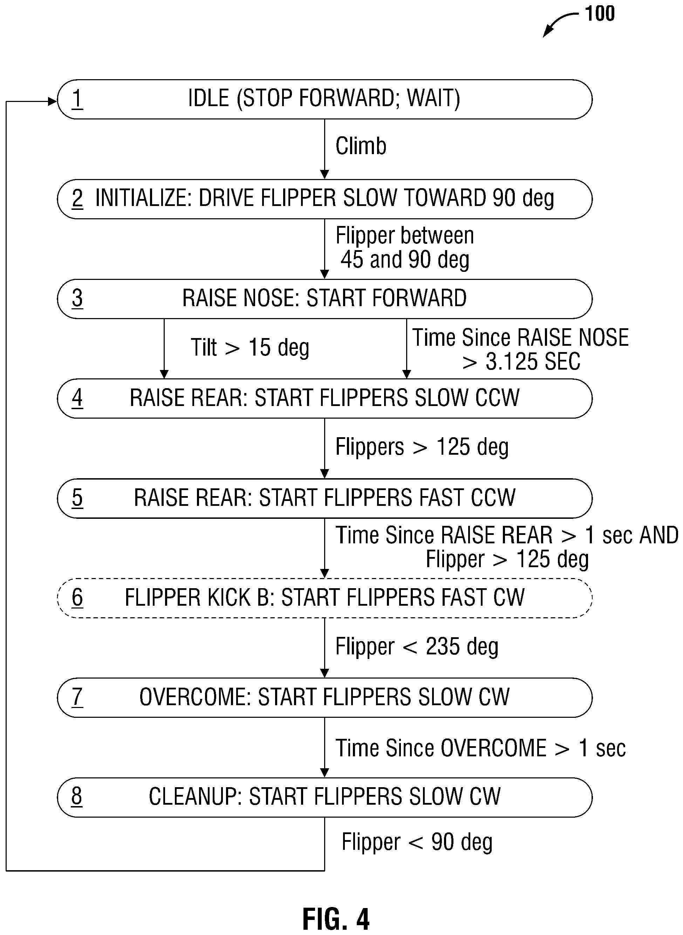

With reference to FIGS. 3a-p and FIG. 4, flippers 14 are further configured to be driven to rotate at predetermined intervals in stair or obstacle surmounting maneuvers. Flipper positioning angles are stated with reference to the horizontal axis of chassis 6 as shown in FIG. 4 with 0 degrees being the stowed flipper position, 90 degrees being a vertical position, 180 being a trailing position and 270 being a downward position. An obstacle surmounting control routine is initiated by detection of an obstacle or predetermined scenario or by operator input. In state 1 of the routine, shown in FIG. 3A, robot 2 approaches a stair with flippers 14 is a forward stowed position substantially parallel to the ground at 0 degrees.

During obstacle surmounting maneuvers, a main obstacle surmounting control routine 100 is run on a controller at 64Hz while sampling accelerometer data at 16Hz and updating the flipper position at 16Hz. Upon detection of the stair or other obstacle, the control routine enters state 2, in which flippers 14 are rotated upward and rearward between approximately 45 and 90 degrees, as shown if FIG. 3B. In state 3 shown in FIG. 3C, the forward end of robot 2 begins to ascend the front face or riser of a stair. Once the robot has ascended to a predetermined position shown in FIG. 3C as detected by an accelerometer, e.g., between about 15 and 45 degrees or a sensor reading of about 0.75 g, the routine enters state 4. Passage of a predetermined time since entering state 3, e.g., 3 seconds, can also trigger the fourth state.

In the fourth state, flippers 14 are rotated further counterclockwise or rearward between the positions shown in FIGS. 3D-3G, e.g., between about 90-125 degrees, as tracks 12 are further driven such that the forward end continues to ascends the stair riser and rearward end of robot 2 approaches the stair riser. After a predetermined time, e.g., 1 second, and as robot 2 approaches a substantially vertically position shown in FIG. 3G, flippers 14 contact the underlying surface at approximately 125 degrees and the routine enters a fifth state.

In the fifth state, flippers 14 are rotated quickly counterclockwise to lift the rearward end of robot 2 through the range shown in FIGS. 3G-M, e.g., between about 125 and 275 degrees, while tracks 12 are driven until the center of gravity of robot 2 clears the nose of the stair as shown in FIG. 3N. Flippers 14 further serve to resist back sliding or any wheelie tendency as robot 2 clears the stair nose.

In an optional sixth state, if flippers reach about 275 degrees and the accelerometer has not detected that the center of gravity of the robot has cleared the nose of the stair, flippers 14 are kicked backward from about 275 degrees, e.g., to less than about 235 degrees, in an effort to topple robot 2 forward from a possible teetering position.

Once the accelerometer detects that the center of gravity of robot 2 has cleared the nose of the stair, the routine enters a seventh state. In state 7, robot 2 overcomes the stair and tips forward as the center of gravity clears the stair nose as shown in FIG. 3M. Upon entering state 7, or after a short time delay, e.g., 1 second, flippers 14 are rotated clockwise towards a trailing position as shown in FIG. 3O. This prevents flippers 4 from catching on the surmounted obstacle as the robot is driven forward.

Once the accelerometer detects that the robot has settled atop the stair or after a predetermined period of state 7, e.g., 1 second, an eighth routine state causes flippers 14 to return to a default position, e.g., substantially vertical, to prepare to surmount a second stair. Flipper position is determined in the different states using a flipper position sensor.

States 1-8 and the various maneuvers shown in FIGS. 3B-P are then repeated as needed to surmount successive stairs or other obstacles.

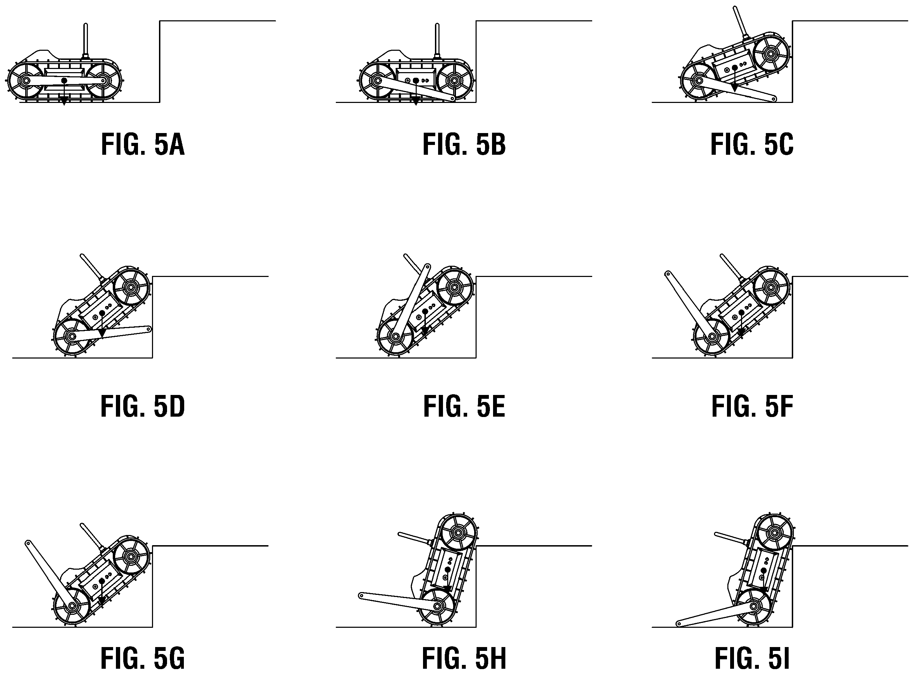

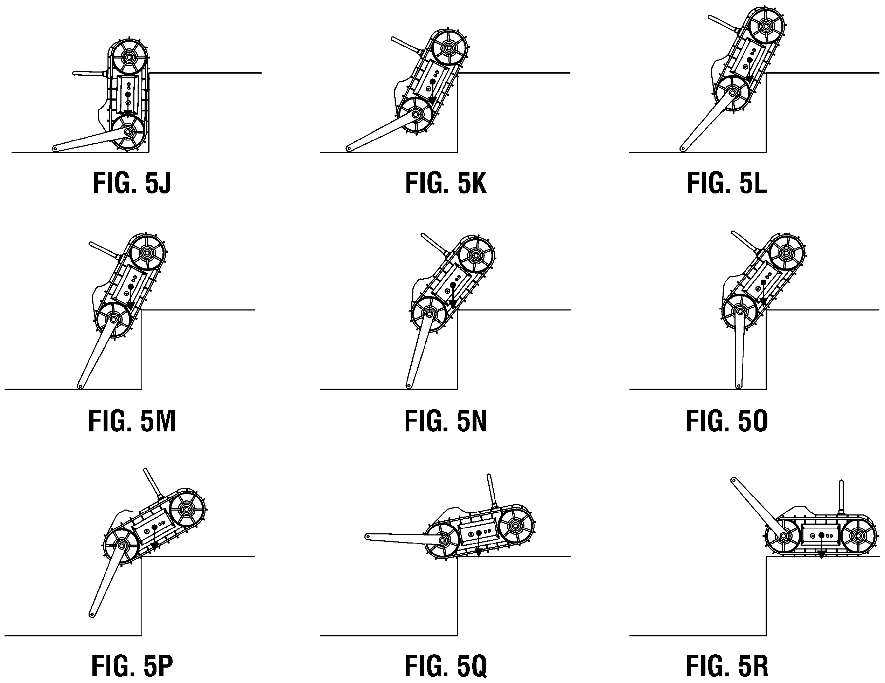

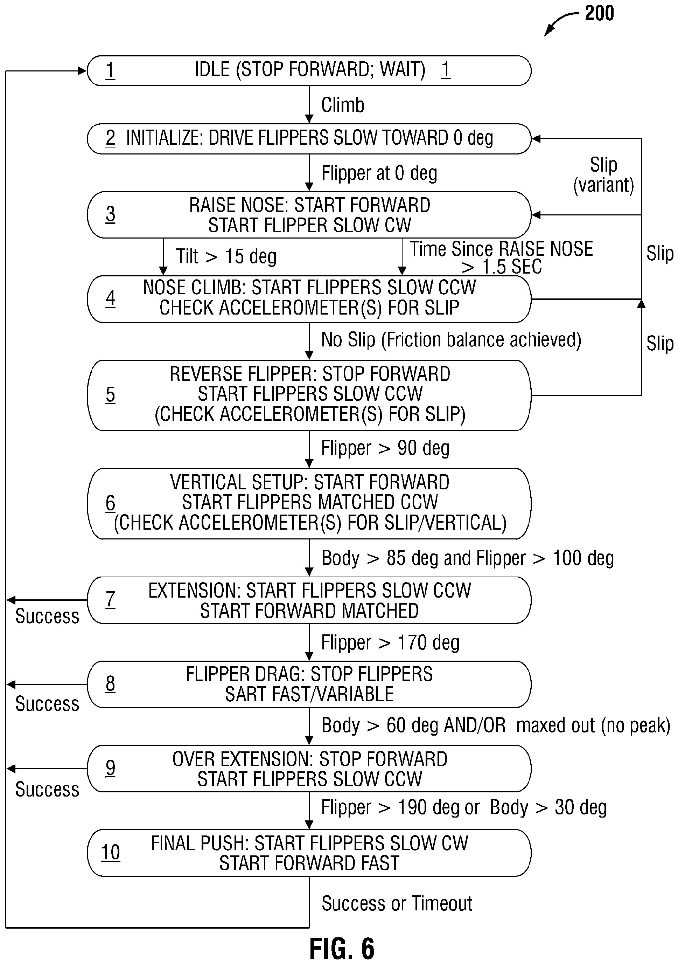

Another obstacle surmounting routine 200 is described with reference to FIGS. 5A-R and FIG. 6. When the front wheels encounter a vertical stair riser, there may not be sufficient ground friction to allow the wheel/tracks to climb the riser. This is particularly true in dusty or sandy environments where the floor friction can be substantially less than that of the cleaner stair riser. To assist the front wheels in initiating climbing, flippers 14 are used to initially raise the forward end of the robot 2. This can also be particularly helpful if a stair riser is angled outward.

In state 1, the robot advances forward towards the stair riser as shown in FIG. 5A. Tracks 12 are driven forward until the robot reaches the riser.

In state 2, flippers 14 are rotated to the stowed position, e.g., 0 degrees in preparation for lifting the nose of the robot.

In state 3, flippers 14 are rotated "clockwise" downward such that the distal ends of flippers 14 contact the underlying surface forward of the center of gravity of robot 2 as shown in FIG. 5B. Tracks 12 are advanced to ascend the stair riser.

In state 4, continued clockwise rotation of flippers 14 causes the forward end of robot 2 to raise up off the underlying surface at to a predetermined angle, e.g., about 15-45 degrees, as shown in FIG. 5C. If the angle is not reached within a preset time, e.g., 1.5 seconds, the routine advances to the next state.

The predetermined angle is selected to approximate the angle at which the frictional forces between the tracks and the floor and the tracks and the stair riser are sufficiently balanced to prevent back-sliding of the robot. Balance of the frictional forces between the track the riser and underlying surface enables the track to ascend the riser without continued clockwise rotation of flippers 14. The routine can periodically test to see if the friction balance point has been achieved by slightly lifting the flippers and using the accelerometers to detect backsliding. Once it is determined that the balance point has been reached or passed, the flipper is no longer needed to raise the forward end of the robot. If the accelerometer detects slippage or backsliding of the robot, previous states can be repeated as needed. In some embodiments, the track velocity is coordinated with the flipper motions to help maintain traction and frictional balance.

In state 5, flippers 14 are rotated clockwise to an "upwards" position as shown in FIGS. 5 E-F, e.g., to 90 degrees, to prevent the robot from flipping over backwards as the wheels continue to climb. This movement is preferably performed without substantially shifting the center of gravity or introducing disturbances that would upset the frictional balance.

It is advantageous for flippers 14 to be long enough to extend forward of the center of gravity, yet short enough to not get caught under a stair nose when later rotating counterclockwise, as shown in FIGS 5D-E to prepare to raise the rearward end of the robot. An estimated maximum flipper length is calculated by adding the wheel radius to the product of the length of the robot chassis and cosine of the angle at which the frictional forces are sufficiently balanced to enable continued climbing by the tracks. This flipper length provides sufficient clearance for retraction of the flippers from a forward to a rearward position after partial ascend of a stair rise by the robot. Of course, flipper length can be dictated by anticipated obstacle profiles including more aggressive forward riser angles.

In state 6, tracks 12 are advanced to position the chassis substantially vertically against the stair riser with flippers rotated counterclockwise to a point adjacent to or contacting the ground as shown in FIGS. 5G-J.

In state 7, flippers 14 are extended, e.g., from about 100 degrees to 175 degrees, while tracks 12 are driven at a "matched" velocity as shown in FIGS. 5J-O, or slightly faster as dictated by the geometry of the problem, to allow the track to evenly surmount the stair nose as the robot is pushed upward by flippers 14. Matching of the track velocity to the flipper rotation means that the tracks are advancing a distance equal to the amount of extension provided by rotation of flippers 14. Velocity matching can also be used to maintain an angle of incline of chassis 6 as the robot surmounts the stair nose.

In state 8, tracks 12 are driven while flippers 14 simply drag behind to prevent backsliding or wheelies as shown in FIG. 5N. Flippers 14 are paused momentarily at the point of maximum extension, e.g., when the flipper tip is farthest away from the track/step corner, while the tracks continue to be driven forward. As the track cleats bounce over the stair nose, the flipper tips will bounce and drag along the ground closer to the step wall. The track speed can be varied to achieve a desire bouncing pattern.

In state 9, flippers 14 are again rotated counterclockwise to provide an extra extension to slightly level out the robot. This "over extension" of the flippers can also help tip the robot center of gravity over the stair nose.

In state 10, tracks 12 are driven quickly while flippers 14 are slowly rotated clockwise back to the full extension point to climb onto the top of the step as shown in FIGS. 5P-R. In this position, the flippers can catch the robot should it happen to back slide or tumble backwards. Once the center of mass of the robot extends forward of the stair nose, the robot falls forward on top of the step.

Once the vehicle tips forward of the step nose (as indicated by the accelerometers showing the tilt angle going back to level) flippers 14 are restored to a default driving or stowed position.

In another control routine, flippers 14 can be continuously rotated to overcome a high centered position. A high centered position can be detected in multiple ways. For example, monitoring of video data, monitoring accelerometer data, comparing odometer and navigational data, GPS data discrepancies. Track motions can be coordinated with flipper motions to pull the vehicle forward, e.g., by driving the tracks when the flipper is in contact with the surface at the same rate that the flipper is expected to pull the vehicle forward. Flipper rotation rates can depend on the expected or detected terrain, e.g., whether the flipper tips will penetrate the terrain surface. The effective flipper radius can be dynamically determined by signal processing the accelerometer signals after repeated rotations of the flipper as a function of flipper tip penetration into the underlying surface. To prevent "digging in," the tracks can be driven when the flippers are in contact with the underlying surface. The flipper rotational rate can be selected as a function of surface penetration and movement of the robot over the terrain and baseline data for behavior of the robot driving over different terrains.

In the depicted embodiment, the flippers extended substantially the distance between the drive wheel axle and the idler wheel axle. According to the invention, the flipper length is selected to fit entirely within the length of the chassis and to extend forward of the robot center of gravity. In some cases the flippers are at least as long as the idler wheel radius. The flippers or flipper length can be selected based on the dimensions of anticipated obstacles.

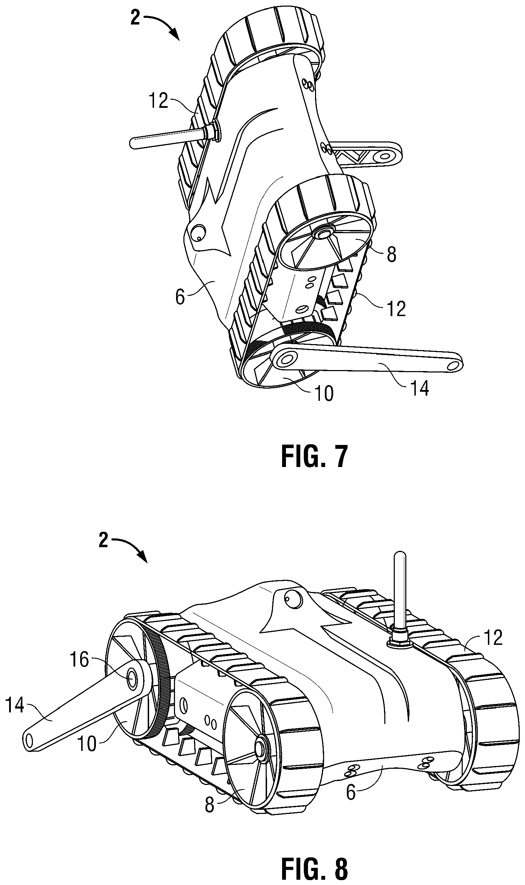

With reference to FIG. 7, flippers 14 are configured to extend from axle 16 centrally to a point beyond the center of gravity of robot 2. This allows robot 2 to be inverted or self-righted simply by rotation of flipper 14 through an arc of 90 degree beyond contact with an underlying surface.

Rotation past a vertical stability point causes the robot to fall over completing the inversion. Self-righting is often required after tumbling down stairs or other inclines, or from atop other obstacles. Robot 2 can descend stairs forwards or backwards with flippers 14 in a stowed position, driving tracks 12 either direction and tumbling or rolling to a resting position.

In some embodiments, robot 2 has more ground clearance in one orientation than another. In some cases, a camera, antenna, sensor or robot accessory may need to be reoriented upward if robot 2 lands upside down after a descent from an obstacle.

With reference to FIG. 8, flippers 14 can also be rotated to partially elevate the rearward end of robot 2. In some cases, flippers 14 can be used to raise or upend robot 2 to position a camera, antenna, sensor, munitions or the like at a desired height or angle or for helping to pull robot 2 from a high centered position.

Flippers 14 can be repeatedly or continuously rotated in either direction to provide a "swimming" motion to help propel robot 2 through loose debris, gravel, sand and the like. Flippers 14 can raise the nose of the vehicle, to both help start a climb and to elevate a fixed camera.

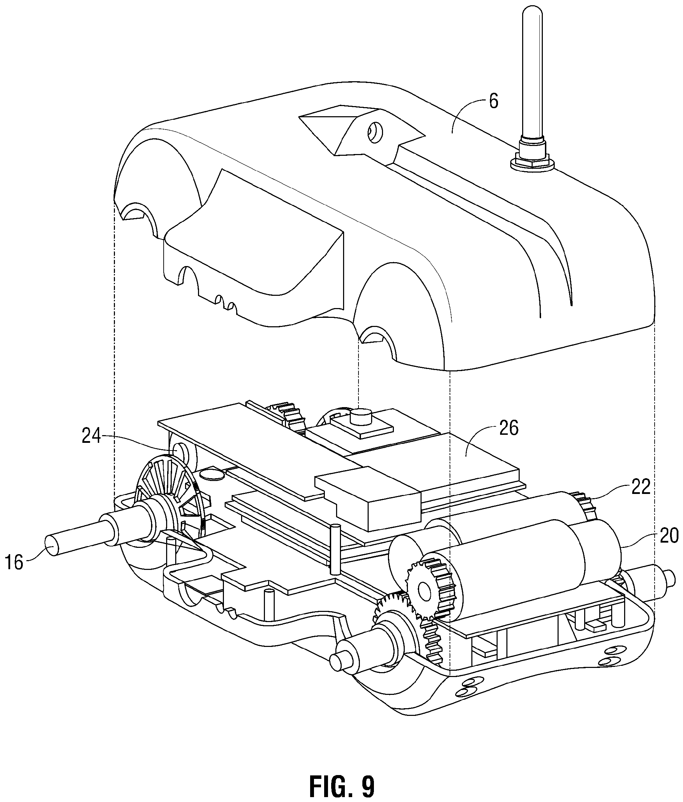

With reference to FIG. 9 robot chassis 6 houses, *inter alia,* wheel drive motors 20 and 22 for powering drive wheels 8 and a flapper drive motor 24. Chassis 6 also houses an electrical subassembly 26 and battery (not shown) positioned below electrical subassembly. The battery is a significant portion of the total weight of robot 2 and is positioned substantially centrally front to back and towards the bottom of chassis 6. A clamshell chassis body design allows provides sufficient volume for electronics and mechanical drive mechanisms within a protective cover.

Flipper drive motor 24 is used to control the angle between flappers 14 and chassis 6. Flipper drive motor 24 is coupled via a gear reduction train to axle 16. A slip clutch can be used to transfer output torque from flipper drive motor 24 to axle 16. A slip clutch can be adjustable to set a predetermined slip torque. Flippers 14 are connected via solid axle 16 and an optic sensor on axle 16 provides for detection of the position of flippers 14 regardless of clutch slippage. One clutch embodiment includes two beveled gears engaged with a spring, similar to a cordless drill clutch. Axle 16 passes through a central opening in idler wheels 10 and fixedly connects to flippers 14.

At the rear of the robot are two flippers 14 with the ability to rotate 360° continuously to flip the robot over when inverted. The flippers also assist the robot in climbing and negotiating small obstacles. Also integrated into the flipper mechanism is a slip clutch to protect the gearing in case of impact.

Drive motors 20, and 22 are 1 watt DC brushed motors. In other versions of the robot, brushless motors can be used. Drive motors 20 and 22 turn output drive gears that attach to the wheels via integral splines. Output drive gears are retained via brass or Delrin bushings that register and align complementary portions of the chassis body. Drive motors 20 and 24 are geared down 29:1 to drive wheels 8.

Steering is accomplished using differential speed of the tracks 14 on either side of the robot by varying the speed of drive motors 20 and 22. The robot will, in principle, skid around the center of chassis 6 approximately at the midpoint of the length of tracks allowing complete turning with the extremes of the robot staying within a 23 cm (9") diameter circle.

In some cases, tracks 14 can be driven while flippers 14 maintain an end of robot 2 elevated above an underlying surface, for example to reposition an elevated antenna or camera. Other preprogrammed flipper or robot positions can include fully extended, stowed, inclined, upright, and "wheelie." In addition, robot 2 can perform several maneuvers including self righting, stair climbing, and recovery from high centering.

The chassis body can further serve to retain bushings for moving parts and as a mounting surface for an antenna, camera, microphone, sensors and the like. Dust and moisture seals can be provided where axles or other components pass through the chassis body. For example, brass bushing securing at openings around chassis body 6 serve to support axle 16 and the idler wheel axles. Chassis body 6 can also carry an antenna connector base (e.g., standard SMA antenna connector).

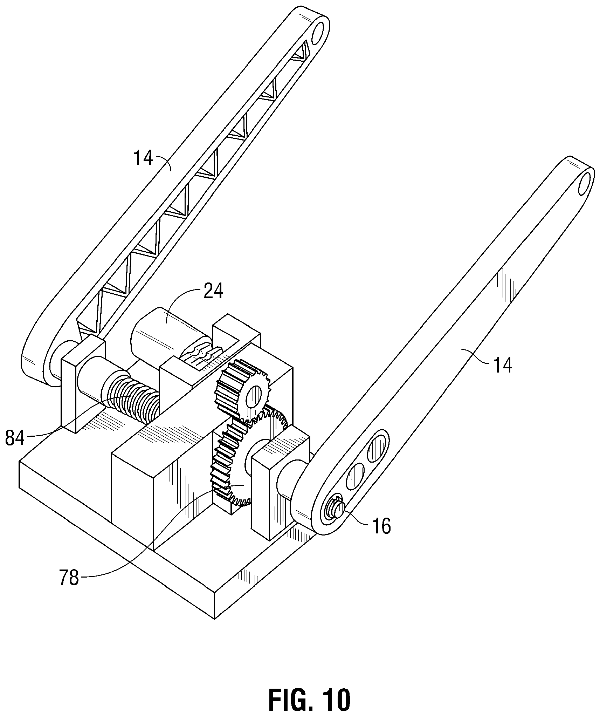

With reference to FIG. 10, flippers 14 are rotated by drive motor 24 (0.4 watt DC brushed motor) via gear train 26. Flipper drive motor 24 is geared down 298:1 to axle 16 to provide a torque of approximately 400 mNm (∼2x required to lift vehicle weight). Clutch can be adjusted to provide up to 700 mNm of slip torque. A slip clutch prevents overloading of flipper drive motor 24 and gearing, for example due to an impact on the arms.

Flippers 14 can be stowed parallel to chassis 6 and tracks 12 when it is deployed by tossing or dropping it through a window or door or when the robot tumbles. In some embodiments, a mechanical energy storage provides for sudden release to move the flippers to allow the robot to perform a small leap motion. An example energy storage system can be a spring, flywheel or other mechanical energy storage mechanism.

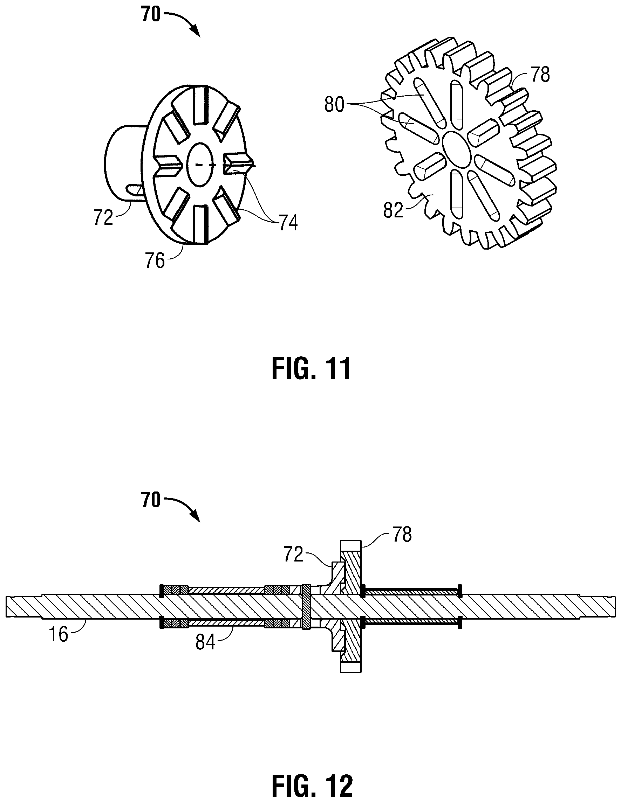

With reference to FIGS. 11 and 12, a slip clutch 70 is provided on axle 16 between drive motor 24 and flippers 14. Slip clutch 70 includes a first sprocket 72 carrying a series of drive teeth 74 on a first rotary surface 76. First sprocket 72 is fixedly attached to axle 16. A second sprocket 78 defines a series of slots 80 in a second rotary surface 82 for receiving the drive teeth 74 of first sprocket 72. Drive teeth 74 and slots 80 remain engaged so long as first and second rotary surfaces 76 and 82 remain substantially in contact.

Under sufficient toque, the tapered surfaces of teeth 74 cam rotary surfaces 76 and 82 apart allowing teeth 74 to slip one or more slots. Sprockets 72 and 78 are biased towards engagement via a spring 84retained on axle 16. Spring 84 provides an axial force to slip clutch 70 to resist separation of surfaces 76 and 82. First sprocket 72 is connected to axle 16 while second sprocket 78 spins freely about axle 16 when disengaged from sprocket 72. Second sprocket 78 includes gear teeth about its circumference to engage drive motor 24.

During obstacle surmounting maneuvers, drive motor 24 turns second sprocket 78 which in turn rotates first sprocket 72 and axle 16 to rotate flippers 14.

Alternatively, a slip clutch can be formed of sufficiently pliable material to allow flexure of rotary surfaces 76 and 82 under sufficient torque. Any number of frictional or cammed surfaces or other known types of slip clutches can be substituted for slip clutch 70.

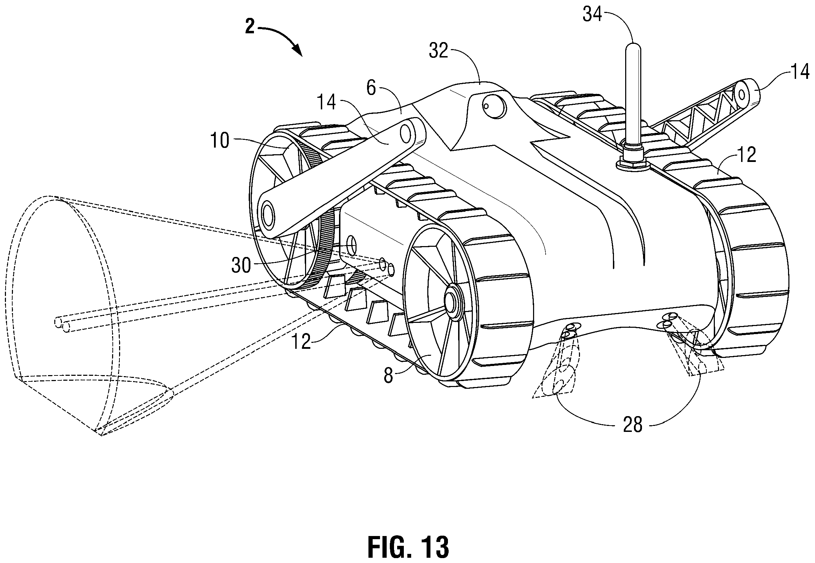

With reference to FIG. 13, robot 2 is provided with a pair of end sensors 28 and side sensors 30. Sensors 28 can be positioned on one or both ends of robot 2 and sensors 30 can be positioned on one or more sides of robot 2. Sensors 28 and 30 include IR emitter/detector pairs. Sensors 28 are directed substantially parallel in front of tracks 12 to act as cliff detectors to detect and avoid falls and sensors 30 are directed outward from chassis 6 to act as wall detectors. Sensors 28 and 30 can include filtering features to accommodate ambient sunlight. Sensors 28 and 30 provide feedback that is used by robot 2, for example, to follow a wall or avoid a drop off. Sensors 28 and 30 can include sonar, infra red, proximity, impact or other sensor suitable to detect the presence or absence of an object in the sensor range. Additional sensor based autonomous robot behavior routines are disclosed in U.S. Patent No. 6,883,201, titled "ROBOT OBSTACLE DETECTION SYSTEM".

Additional autonomous behavior routines and control systems are disclosed in U.S. Patent No. 6,809,490 titled "METHOD AND SYSTEM FOR MULTI-MODE COVERAGE FOR AN AUTONOMOUS ROBOT" and U.S. Patent No. 7,459,871 titled "DEBRIS SENSOR FOR CLEANING APPARATUS". The routines include motion control and coverage behaviors such as spiral coverage, cruising, bounce and recoil from an obstacle, wall following, self-alignment, and escape behaviors as selected by an arbiter according to principles of behavior based robotics. Additional reactive controls and behavior routines are provided for reacting to and concentrating on a point of interest in the coverage space. Similar behaviors can be used to seek out a peak signal strength peak or radio hot spots or to reposition a robot as a node in a mesh network.

Sensors can be shielded within the track volume, within the protective shell of chassis 6 or positioned on the front and rearward ends of the vehicle. The top and bottom portions of chassis 6 can be fitted with any number of sensors, cameras, antennae, chemical sensors, bio-sensors, radiation sensors and the like.

Additional robot sensors provide input regarding flipper rotation position, connector to a charging station, presence of a deactivation plug (pull pin). For example, robot 2 can be powered off if sensors detect that drive motors 20 or 22 have stalled of if the robot is otherwise stuck.

Chassis 6 also supports a camera 32 and antenna 34 to provide video telemetry and other communications data. Camera 32 is depicted positioned slightly rear of center, with the lens angled up to minimize the field of view obstructed by the robot vehicle itself. Flippers 14 can be rotated to raise the nose of the vehicle further if the camera view is insufficiently high. To look over an edge, flippers 14 can be used to raise the rear of the vehicle to depress the camera view angle.

Transmission of video telemetry data or other sensor data from within a building can enable a small force to quickly and safely assess a location or situation. For example, a camera can be used to quickly and safely determine the presence and location of an adversary or explosive in a building

Robot 2 includes the capability of carrying a variety of accessories or sensors, including cameras, sonar sensors, infra-red detectors, inertial sensors, motor position, velocity and torque sensors, inclinometers, a magnetic compass, microphones, sound generator, or small weapon. Sensors can be placed on all surfaces of the robot. For example, night time or low light operation can be performed using onboard light such as an infra-red (IR) array with a useful range of several meters. A small white light can also be provided for up close color identification of objects.

A multi camera array can provide stereoscopic vision for navigation and video transmission back to remote control system 4. For example, multiple cell phone style cameras, each with multi-megapixel accuracy and a 90° field of view, to provide full 360° field of view. The robot can be configured to monitor for motion and alert the operator if motion is detected. Similarly, an onboard microphone can enable an alert to be sent to the operator if sound above a designated threshold is detected.

Onboard computing coupled with a multi megapixel imager can provide high resolution image capture and digital pan tilt zoom of the digitally compressed and encrypted video stream. This minimizes the mechanical complexity of the system by eliminating the need for a mechanical pan-tilt assembly, and allows the use of image processing for unattended operation such as change detection and digital video recording of motion. Integrated infrared illuminators can provide sufficient illumination for navigation in an urban environment, while white light illuminators can be used to identify targets up close. One example is a 1.3 Megapixel camera with mpeg4 compression capabilities.

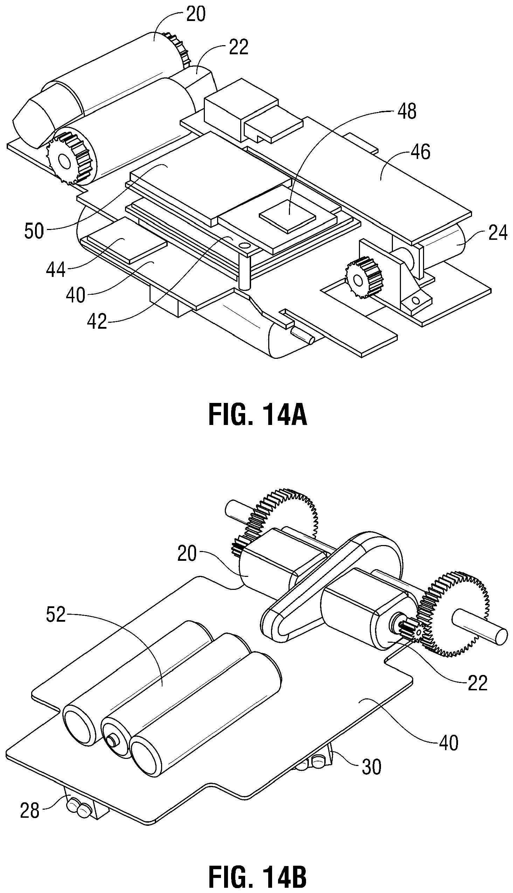

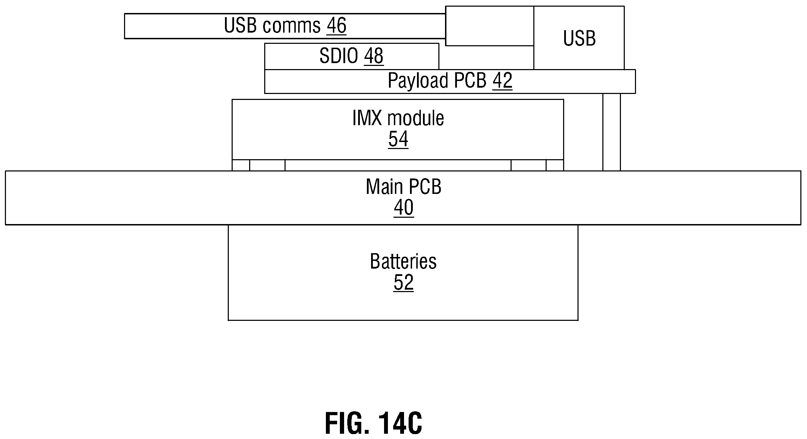

With reference to FIGS. 14a-b, electrical subassembly 26 is mounted between the flipper drive motor 24 and wheel drive motors 20, 22 above batteries 52. Electrical subassembly includes a main printed circuit board (PCB) 40 to which are electrically connected a removable mass memory 44, USB communication module 46; SDIO communication module 48, SDIO port 50. The battery, drive motors 20, 22 and 24, camera 32 and antenna 34 are operably coupled to electrical subassembly 26. PCB 40 also carries end sensors 28 and side sensors 30. PCB 40 can include rigid circuit boards, flexible polyimide circuits, or other circuit modules or combinations thereof, and may provide power regulation, motion control, sensors, and other functions.

Battery 52 includes a lithium ion battery pack with three 18650 cells in series. Each cell has a capacity of 2.6 AHr, and contains 0.78 grams/cell of lithium, or 2.3 g of lithium per assembled robot. Internal rechargeable Li-Ion battery pack 52 has a two hour charge time via 110v or 220v circuits. Both robot 2 and the OCU remote control 4 can be charged by a single adapter capable of accepting universal power (100-240VAC 50/60Hz). Optional charge adapters can be used for charging at 12-24VDC. Battery 52 can be attached directly to PCB 40 via VHB tape. Solar power can be used to charge the battery or provide for extended duration low power surveillance.

A substantial capacitor bank is used to minimize the ripple in the battery draw in powering the drive motors. It may be desirable in some cases to destroy internal circuits by reversing the polarity of the capacitor bank into the lithium batteries to ignite the batteries. A sudden reversal of the energy from the capacitors creates a large current surge sufficient to cause an electrical fire. This would help frustrate the ability of hostile warfighters from reusing any of the components.

PCB 40 includes one or more computer processors and associated memory systems. PCB 40 is coupled to communication modules 46, 48, which include, for example, a radio for exchanging control and feedback information with remote control system 4. Communications range with USB and SDIO radios was experimentally found to be approximately 40 meters of open area or through two cinderblock walls of a building.

Odometry sensors detect a pattern referenced to axle 16, such as a slotted or patterned strip secured to an axle, e.g., via a piece of clear heatshrink tubing, or a slotted disc attached to an axle or driven wheel 8. The odometery sensor is located on the idler wheel to account for track slippage on drive wheel 8. Odometry reading accuracy may be increased by harder turns as opposed to sweeping turns.

Additional sensors determine the angle between flippers 14 and chassis 6 and the rate of rotation of flippers 14 or wheels 8 or 10. An angular rate sensor is placed near the center of gravity of the robot 2 to track the bearing of the robot and provide increased positioning accuracy, facilitating movement in areas with few visual landmarks. Optional accelerometers can be located near the angular rate sensor. These inputs are used during full or partial autonomous robot operation.

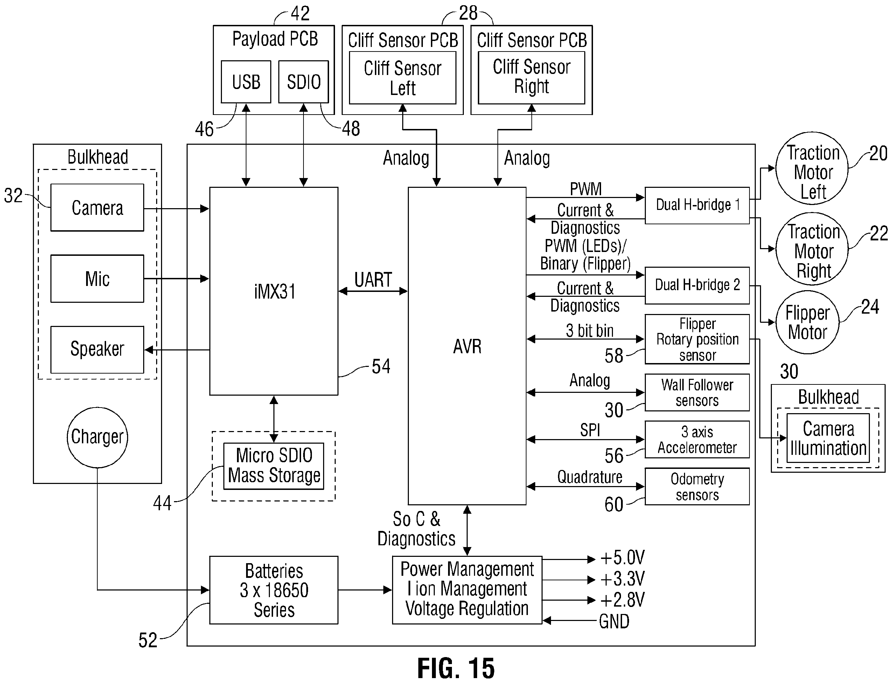

With reference to FIG. 15, a functional block diagram of electrically connected system components of an embodiment of a robot is shown. PCB 40 is electrically connected to an iMX31 processor 54, USB communication module 46, SDIO communication module 48, flash memory 44, infrared sensors 28, proximity sensors 30, STmicro LIS344ALH three axis accelerometer 56, flipper rotary position sensor (RPS) 58, SDIO / USB Payload PCB 42, and STmicro LISY300AL angular right sensor, camera 32, battery 52, drive motors 20, 22 and 24 with appropriate interfaces, controllers and the like.

The electrical components may also include one or more of the following: microphone, yaw sensor, active/passive analog IR LED and phototransistors, SDIO radios, 802.11b/g/n radio, satellite phone, EVDO cellular phone, USB peripherals, additional batteries, Bluetechnix IMX, GPS transponders and the like.

In various embodiments, communications modules 46 and 48 serve to provide multi-hop style communications chains, to extend the usefulness of the robots deep into radio frequency (RF) denied areas using standard Optimized Link State Routing daemon (OLSRd) software mesh networking. The robots can be repositioned to maintain a self healing communications network

According to one method of establishing a mesh network, the deactivation plug is removed to activate each robot. The robots are then placed in approximate locations for autonomous mesh networking. The robots automatically reposition to maintain the mesh network.

Advantageous Mesh Network Capabilities are disclosed generally in the LANdroids Bidders Day Briefing, Document Number BAA 07-46, released July 6, 2007 and available from DARPA.

When the mission is over, the robots can be recovered as required and charged to be ready for the next mission. When the robots are not in use and not being charged, the deactivation plugs are installed into the charge connectors to power off the robots and keep the batteries from draining prior to the next mission.

A number of embodiments of the invention have been described. Nevertheless, it will be understood that various modifications may be made without departing from the scope of the invention defined by the appended claims. For example, alternative embodiments can include four or six driven wheels and a single or multiple trailing pivoting arms. Accordingly, other embodiments are within the scope of the following claims.

## Claims

1. A mobile robot (2) comprising:
a robot chassis (6) having a forward end, a rearward end and a center of gravity;
a driven support surface (12) moveably connected to the chassis (6) and configured to propel the robot chassis (6) forward and rearward;
a first articulated arm (14) rotatable about an axis (16) located rearward of the center of gravity of the robot chassis (6),
wherein the arm (14) is configured to trail the robot (2), to rotate in a first direction to raise the rearward end of the robot chassis (6) while the driven support surface (12) propels the chassis (6) forward in surmounting an obstacle, and to rotate in a second opposite direction to extend forward beyond the center of gravity of the robot chassis (6) to raise the forward end of the robot chassis (6) and invert the robot (2) endwise; and
a controller configured to operate the mobile robot (2) in an obstacle surmounting maneuver comprising:
driving the support surface (12) to propel the robot (2) to contact a riser of a first obstacle with the forward end of the robot (2),
driving the support surface (12) to cause the forward end of the robot (2) to ascend the riser of the first obstacle;
pivoting the first arm (14) to raise the rearward end of the robot (2) as the forward end of the robot (2) ascends the riser of the first obstacle;
driving the support surface (12) to advance the forward end of the robot (2) over the top of the obstacle riser; and
pivoting the arm (14) to further raise the rearward end of the robot (2) such that the forward end of the robot (2) tips downward beyond the top of the riser of the first obstacle.

2. The robot of claim 1, wherein the driven support surface (12) includes a flexible track trained about a pair of wheels (8, 10).

3. The robot of claim 2, wherein the axis (16) of the arm (14) is coaxial with an axis of a one of the wheels (8, 10).

4. The robot of claim 1, further comprising a second articulated arm (14) rotatable about the axis (16) with the first articulated arm. arm (14).

5. The robot of claim 1, wherein the first and second arms (14) are located outward of the driven support surface (12) and are continuously rotatable in either direction.

6. The robot of claim 1, wherein the first arm (14) is located substantially along a central longitudinal axis of the robot chassis (6).

7. The robot of claim 1, wherein the first arm (14) is continuously rotatable to provide a swimming-type propulsion.

8. The robot of claim 1, wherein the first arm (14) is configured to rotate at a predetermined rate as a function of an angle of incline of the robot chassis (6).

9. The robot of claim 1, further comprising a radio transceiver and wherein the first arm (14) is rotatable to raise the robot chassis (6) to elevate the transceiver.

10. A method for operating a mobile robotic vehicle (2) having a driven support surface (12) and a first pivoting trailing arm (14) to surmount obstacles including a series of obstacle risers, comprising:
driving the support surface (12) to propel the vehicle (2) to contact the riser of a first obstacle with a forward end of the vehicle (2);
driving the support surface (12) to cause the forward end of the vehicle (2) to ascend the riser of the first obstacle;
pivoting the first arm (14) to raise a rearward end of the vehicle (2) as the forward end of the vehicle (2) ascends the riser of the first obstacle;
driving the support surface (12) to advance the forward end of the vehicle (2) over the top of the obstacle riser; and
pivoting the arm (14) to further raise the rearward end of the vehicle (2) such that the forward end of the vehicle (2) tips downward beyond the top of the riser of the first obstacle.

11. The method of claim 10, further comprising repeating the driving and pivoting to surmount a second obstacle.

12. The method of claim 10, further comprising pivoting the arm (14) to raise the forward end of the vehicle (2) to assist in ascending the obstacle riser.

13. The method of claim 10, further comprising pivoting the arm (14) to flip the vehicle (2) endwise.

14. The method of claim 10, wherein raising the forward end of the vehicle (2) raises a radio transceiver on the vehicle.

15. The method of claim 10, further comprising supporting the vehicle (2) in a first substantially horizontal orientation on an underlying surface and pivoting the arm (14) to contact the underlying surface to raise the forward end of the vehicle (2) past a stable point, and allowing the vehicle (2) to topple over to a second orientation inverted with respect to the first orientation.

16. The method of claim 10, wherein pivoting the first arm (14) and driving the support surface (12) are performed substantially asynchronously.

17. The method of claim 10, wherein the support surface (12) propels the vehicle (2) to a predetermined angle of incline before the first arm (14) is initially pivoted to raise the rearward end of the vehicle (2).

18. The method of claim 10, wherein the first arm (14) is pivoted at a predetermined rate for a predetermined period upon detection of a predetermined angle of incline of the vehicle. vehicle (2).

## Patentansprüche

1. Mobiler Roboter (2), umfassend:
ein Roboterchassis (6) mit einem vorderen Ende, einem hinteren Ende und einem Schwerpunkt;
eine angetriebene Aufstandsfläche (12), die beweglich mit dem Chassis (6) verbunden und dafür ausgelegt ist, das Roboterchassis (6) vorwärts und rückwärts anzutreiben;
einen ersten Schwenkarm (14), der um eine Achse (16) drehbar rückwärts des Schwerpunktes des Roboterchassis (6) angeordnet ist,
wobei der Arm (14) dafür ausgelegt ist, dem Roboter (2) nachzulaufen, sich in einer ersten Richtung zu drehen, um das hintere Ende des Roboterchassis (6) anzuheben, während die angetriebene Aufstandsfläche (12) das Chassis (6) vorwärts antreibt zum Überwinden eines Hindernisses, und sich in einer zweiten, entgegengesetzten Richtung zu drehen, so dass er sich vorwärts über den Schwerpunkt des Roboterchassis (6) hinaus erstreckt, um das vordere Ende des Roboterchassis (6) anzuheben und den Roboter (2) der Länge nach zu drehen; und eine Steuerung, die dafür ausgelegt ist, den mobilen Roboter (2) während eines Manövers zur Hindernisüberwindung zu steuern, umfassend:
Antreiben der Aufstandsfläche (12), um den Roboter (2) anzutreiben, so dass das vordere Ende des Roboters (2) eine Anstiegsseite eines ersten Hindernisses berührt,
Antreiben der Aufstandsfläche (12), um zu bewirken, dass das vordere Ende des Roboters (2) die Anstiegsseite des ersten Hindernisses erklimmt;
Drehen des ersten Arms (14), um das hintere Ende des Roboters (2) anzuheben, wenn das vordere Ende des Roboters (2) die Anstiegsseite des ersten Hindernisses erklimmt;
Antreiben der Aufstandsfläche (12), um das vordere Ende des Roboters (2) über die Oberkante der Anstiegsseite des Hindernisses vorzuschieben; und
Drehen des Arms (14), um das hintere Ende des Roboters (2) weiter anzuheben, so dass das vordere Ende des Roboters (2) über die Oberkante der Anstiegsseite des ersten Hindernisses nach unten kippt.

2. Roboter nach Anspruch 1, wobei die angetriebene Aufstandsfläche (12) eine flexible Raupenkette aufweist, die über ein Paar Räder (8, 10) geführt ist.

3. Roboter nach Anspruch 2, wobei die Achse (16) des Arms (14) koaxial mit einer Achse eines der Räder (8, 10) ist.

4. Roboter nach Anspruch 1, ferner einen zweiten Schwenkarm (14) umfassend, der zusammen mit dem ersten Schwenkarm (14) um die Achse (16) drehbar ist.

5. Roboter nach Anspruch 1, wobei der erste und der zweite Arm (14) außerhalb der angetriebenen Aufstandsfläche (12) angeordnet sind und in jeder Richtung durchgängig drehbar sind.

6. Roboter nach Anspruch 1, wobei der erste Arm (14) im Wesentlichen entlang einer zentralen Längsachse des Roboterchassis (6) angeordnet ist.

7. Roboter nach Anspruch 1, wobei der erste Arm (14) durchgängig drehbar ist, um einen schwimmartigen Vortrieb bereitzustellen.

8. Roboter nach Anspruch 1, wobei der erste Arm (14) dafür ausgelegt ist, sich mit einer vordefinierten Geschwindigkeit als Funktion eines Neigungswinkels des Roboterchassis (6) zu drehen.

9. Roboter nach Anspruch 1, ferner einen Funk-Sendeempfänger umfassend, und wobei der erste Arm (14) drehbar ist, so dass das Roboterchassis (6) angehoben wird, um den Sendeempfänger hochzuheben.

10. Verfahren zum Betreiben eines mobilen Roboterfahrzeugs (2) mit einer angetriebenen Aufstandsfläche (12) und einem ersten drehbaren, nachlaufenden Arm (14), um Hindernisse zu überwinden, die eine Folge von Anstiegsseiten von Hindernissen aufweisen, umfassend:
Antreiben der Aufstandsfläche (12), um das Fahrzeug (2) anzutreiben, so dass ein vorderes Ende des Fahrzeugs (2) eine Anstiegsseite eines ersten Hindernisses berührt;
Antreiben der Aufstandsfläche (12), um zu bewirken, dass das vordere Ende des Fahrzeugs (2) die Anstiegsseite des ersten Hindernisses erklimmt;
Drehen des ersten Arms (14), um ein hinteres Ende des Fahrzeugs (2) anzuheben, wenn das vordere Ende des Fahrzeugs (2) die Anstiegsseite des ersten Hindernisses erklimmt;
Antreiben der Aufstandsfläche (12), um das vordere Ende des Fahrzeugs (2) über die Oberkante der Anstiegsseite des Hindernisses vorzuschieben; und
Drehen des Arms (14), um das hintere Ende des Fahrzeugs (2) weiter anzuheben, so dass das vordere Ende des Fahrzeugs (2) über die Oberkante der Anstiegsseite des ersten Hindernisses nach unten kippt.

11. Verfahren nach Anspruch 10, ferner umfassend, das Antreiben und Drehen zu wiederholen, um ein zweites Hindernis zu überwinden.

12. Verfahren nach Anspruch 10, ferner umfassend, den Arm (14) zu drehen, so dass das vordere Ende des Fahrzeugs (2) angehoben wird, um das Erklimmen der Anstiegsseite des Hindernisses zu unterstützen.

13. Verfahren nach Anspruch 10, ferner umfassend, den Arm (14) zu drehen, um das Fahrzeug (2) vom Ende her nach oben zu kippen.

14. Verfahren nach Anspruch 10, wobei durch das Anheben des vorderen Endes des Fahrzeugs (2) ein Funk-Sendeempfänger auf dem Fahrzeug hochgehoben wird.

15. Verfahren nach Anspruch 10, ferner umfassend, das Fahrzeug (2) in einer im Wesentlichen waagerechten Ausrichtung auf einer darunter liegenden Oberfläche aufstehen zu lassen und den Arm (14) zu drehen, so dass er die darunter liegende Oberfläche berührt, um das vordere Ende des Fahrzeugs (2) über einen stabilen Punkt hinaus anzuheben und zuzulassen, dass das Fahrzeug (2) in eine zweite, bezogen auf die erste Ausrichtung umgekehrte Ausrichtung kippt.

16. Verfahren nach Anspruch 10, wobei das Drehen des ersten Arms (14) und das Antreiben der Aufstandsfläche (12) im Wesentlichen asynchron ausgeführt werden.

17. Verfahren nach Anspruch 10, wobei die Aufstandsfläche (12) das Fahrzeug (2) in einen vorbestimmten Neigungswinkel antreibt, bevor der erste Arm (14) erstmals gedreht wird, um das hintere Ende des Fahrzeugs (2) anzuheben.

18. Verfahren nach Anspruch 10, wobei der erste Arm (14) mit einer vordefinierten Geschwindigkeit für eine vordefinierte Zeitdauer gedreht wird, nachdem ein vordefinierter Neigungswinkel des Fahrzeugs (2) erkannt wurde.

## Revendications

1. Robot mobile (2), comprenant :
un châssis (6) de robot présentant une extrémité avant, une extrémité arrière et un centre de gravité ;
une surface d'appui entraînée (12) reliée mobile au châssis (6) et configurée pour propulser le châssis (6) de robot vers l'avant et vers l'arrière ;
un premier bras articulé (14) rotatif autour d'un axe (16) situé vers l'arrière du centre de gravité du châssis (6) de robot, le bras (14) étant configuré pour être à la traîne du robot (2), pour effectuer une rotation dans un premier sens afin de soulever l'extrémité arrière du châssis (6) de robot tandis que la surface d'appui entraînée (12) propulse le châssis (6) vers l'avant lors du franchissement d'un obstacle et pour effectuer une rotation dans un deuxième sens opposé afin de s'étendre vers l'avant au-delà du centre de gravité du châssis (6) de robot afin de soulever l'extrémité avant du châssis (6) de robot et de renverser le robot (2) dans le sens de la longueur ; et
une unité de commande configurée pour piloter le robot mobile (2) lors d'une manœuvre de franchissement d'obstacle comprenant :
l'entraînement de la surface d'appui (12) pour propulser le robot (2) pour l'amener au contact d'une contremarche d'un premier obstacle par l'extrémité avant du robot (2),
l'entraînement de la surface d'appui (12) pour amener l'extrémité avant du robot (2) à gravir la contremarche du premier obstacle ;
le pivotement du premier bras (14) pour soulever l'extrémité arrière du robot (2) tandis que l'extrémité avant du robot (2) gravit la contremarche du premier obstacle ;
l'entraînement de la surface d'appui (12) pour faire avancer l'extrémité avant du robot (2) par-dessus le sommet de la contremarche d'obstacle ; et
le pivotement du bras (14) pour soulever davantage l'extrémité arrière du robot (2) de manière à ce que l'extrémité avant du robot (2) bascule vers le bas au-delà du sommet de la contremarche du premier obstacle.

2. Robot selon la revendication 1, dans lequel la surface d'appui entraînée (12) comporte une chenille souple astreinte autour d'une paire de roues (8, 10).

3. Robot selon la revendication 2, dans lequel l'axe (16) du bras (14) est coaxial avec un axe d'une des roues (8, 10).

4. Robot selon la revendication 1, comprenant en outre un deuxième bras articulé (14) rotatif autour de l'axe (16) avec le premier bras articulé (14).

5. Robot selon la revendication 1, dans lequel les premier et deuxième bras (14) sont situés vers l'extérieur de la surface d'appui entraînée (12) et sont rotatifs de façon continue dans l'un ou l'autre sens.

6. Robot selon la revendication 1, dans lequel le premier bras (14) est situé sensiblement le long d'un axe longitudinal central du châssis (6) de robot.

7. Robot selon la revendication 1, dans lequel le premier bras (14) est rotatif de façon continue pour produire une propulsion s'apparentant à la nage.

8. Robot selon la revendication 1, dans lequel le premier bras (14) est configuré pour effectuer une rotation à une première vitesse prédéterminée en fonction d'un angle d'inclinaison du châssis (6) de robot.

9. Robot selon la revendication 1, comprenant en outre un émetteur-récepteur radio, et dans lequel le premier bras (14) est rotatif pour soulever le châssis (6) de robot afin d'élever l'émetteur-récepteur.

10. Procédé de pilotage d'un véhicule robotisé mobile (2) présentant une surface d'appui entraînée (12) et un premier bras pivotant de traîne (14) pour franchir des obstacles comportant une séries de contremarches d'obstacle, comprenant :
l'entraînement de la surface d'appui (12) pour propulser le véhicule (2) pour l'amener au contact de la contremarche d'un premier obstacle par une extrémité avant du véhicule (2) ;
l'entraînement de la surface d'appui (12) pour amener l'extrémité avant du véhicule (2) à gravir la contremarche du premier obstacle ;
le pivotement du premier bras (14) pour soulever une extrémité arrière du véhicule (2) tandis que l'extrémité avant du véhicule (2) gravit la contremarche du premier obstacle ;
l'entraînement de la surface d'appui (12) pour faire avancer l'extrémité avant du véhicule (2) par-dessus le sommet de la contremarche d'obstacle ; et
le pivotement du bras (14) pour soulever davantage l'extrémité arrière du véhicule (2) de manière à ce que l'extrémité avant du véhicule (2) bascule vers le bas au-delà du sommet de la contremarche du premier obstacle.

11. Procédé selon la revendication 10, comprenant en outre la répétition de l'entraînement et du pivotement pour franchir un deuxième obstacle.

12. Procédé selon la revendication 10, comprenant en outre le pivotement du bras (14) pour soulever l'extrémité avant du véhicule (2) afin de l'aider à gravir la contremarche d'obstacle.

13. Procédé selon la revendication 10, comprenant en outre le pivotement du bras (14) pour renverser le véhicule (2) en bout.

14. Procédé selon la revendication 10, dans lequel le soulèvement de l'extrémité avant du véhicule (2) soulève un émetteur-récepteur radio sur le véhicule.

15. Procédé selon la revendication 10, comprenant en outre la mise en appui du véhicule (2) dans une première orientation sensiblement horizontale sur une surface sous-jacente et le pivotement du bras (14) pour l'amener au contact de la surface sous-jacente afin de soulever l'extrémité avant du véhicule (2) au-delà d'un point stable, et la culbute libre du véhicule (2) vers une deuxième orientation renversée par rapport à la première orientation.

16. Procédé selon la revendication 10, dans lequel le pivotement du premier bras (14) et l'entraînement de la surface d'appui (12) s'effectuent de façon sensiblement asynchrone.

17. Procédé selon la revendication 10, dans lequel la surface d'appui (12) propulse le véhicule (2) jusqu'à un angle d'inclinaison prédéterminé avant le pivotement initial du premier bras (14) visant à soulever l'extrémité arrière du véhicule (2).

18. Procédé selon la revendication 10, dans lequel le premier bras (14) est amené à pivoter à une vitesse prédéterminée pendant une période prédéterminée dès la détection d'un angle d'inclinaison prédéterminé du véhicule (2).
